# EUROPEAN PATENT APPLICATION

(11) **EP 4 764 963 A1**
(43) Date of publication of application: **24.06.2026**
(21) Application number: 25217894.2
(22) Date of filing: 24.11.2025
(51) Int. Cl.: G06N 3/126, G06F 15/78

(54) **ACCELERATION OF EVOLUTIONARY ALGORITHMS THROUGH FPGA-GPU HYBRID**

(30) Priority: 20.12.2024 US 202418991073
(71) Applicant: Altera Corporation, San Jose, CA 95134 (US)
(72) Inventor: MASUD RIZAVI, Wijdaan, Watford, WD25 9RP (GB); ROBERTS, Martin, High Wycombe, HP12 4PU (GB)
(74) Representative: 2SPL Patentanwälte PartG mbB

(57) **Abstract**

Systems, methods, and computer-readable media for performing evolutionary algorithms using an FPGA-GPU hybrid system. A system for performing an evolutionary algorithm may include an integrated circuit device with circuitry to perform population selection and evolution operations of the evolutionary algorithm and a parallel processing system to perform population evaluation of the evolutionary algorithm.

## Description

### BACKGROUND

This disclosure relates to systems and methods for accelerating evolutionary algorithms using a field programmable gate array (FPGA) and graphics processing unit (GPU).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Evolutionary computation is a subfield of artificial intelligence that has emerged as a powerful approach to tackling complex optimization problems. Inspired by natural selection, evolutionary algorithms iteratively improve candidate solutions. Each candidate solution may be considered one of a population of individuals, each representing a potential solution. Evolutionary algorithms evaluate each individual using a fitness function, which determines how well that individual solves the problem. Individuals with superior fitness have a higher chance of being selected for reproduction. This process introduces variations through mechanisms mimicking biological processes, such as recombination (combining traits from two parents) and mutation (random alterations to individual characteristics). These variations create new offspring, forming the next generation of individuals of the population. Over time, the population evolves towards increasingly optimal solutions. However, the effectiveness of evolutionary algorithms is limited by computational constraints. Evaluating large populations, especially for intricate problems, can be extremely time-consuming.

One technique that has been used is hardware acceleration using a field-programmable gate array (FPGA). One FPGA design that has been developed performs all stages (e.g., population, evaluation, selection, and operation) of the algorithm in the FPGA, reporting an average speedup of 4,902× compared to a 28-core CPU, and an average speedup of 43× compared to a GPU. While this is much better than many existing techniques, even with this design, evaluating large populations may be extremely time-consuming. Moreover, the main drawback of this design is that it may only support one particular form of evolutionary algorithm that solves a particular problem.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device;
FIG. 2 is a block diagram of the integrated circuit device of FIG. 1;
FIG. 3 is a block diagram of an FPGA-GPU hybrid evolutionary algorithm accelerator using the integrated circuit device that may offer broad-based adaptability to accelerate a variety of evolutionary algorithms;
FIG. 4 is a flowchart of a method for accelerating an evolutionary algorithm using the FPGA-GPU hybrid evolutionary algorithm accelerator;
FIG. 5 is a block diagram illustrating an operation performed by selection circuitry implemented in the FPGA to select individuals that have been evaluated in the GPU;
FIG. 6 is a schematic diagram of an evolutionary operation that may be performed in operation circuitry implemented in the FPGA;
FIG. 7 is a block diagram illustrating an evolutionary operation that may be performed by operation circuitry implemented in the FPGA to generate a next generation of individuals to evaluate in the GPU; and
FIG. 8 is a block diagram of a data processing system that may incorporate the hybrid FPGA-GPU evolutionary algorithm accelerator of this disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B.

The complexity of evolutionary algorithms is primarily influenced by three factors: population size, number of generations, and the cost of evaluating each individual's fitness. Larger populations allow for a more thorough exploration of the solution space but come at the cost of increased computation per generation. Similarly, a higher number of generations allows for better convergence to an optimal solution but involves a greater number of fitness evaluations. The cost of each evaluation itself significantly impacts the overall runtime of the algorithm. Consequently, the worst-case time complexity of an evolutionary algorithm is essentially a product of these three factors. This inherent complexity raises the value of hardware acceleration. This disclosure leverages specialized hardware - the programmability of field programmable gate arrays (FPGAs) and the parallel processing of graphics processing units (GPUs) - to achieve faster exploration with convergence towards optimal solutions. Additionally, this hardware acceleration can alleviate the computational burden associated with handling larger problems.

As mentioned above, evolutionary algorithms can be split into four stages: population, evaluation, selection, and operation. Analysis suggests performing evaluation in software and the other stages in hardware for a general-purpose engine, as it enables users to write an evaluation function for their particular problem and utilize hardware acceleration for the other stages to evolve solutions to that problem. Accordingly, this disclosure involves using a GPU for the evaluation stage (e.g., to evaluate individuals of the population in parallel using separate threads) alongside an FPGA for the other stages to design a general-purpose evolutionary computation engine with maximal scope for acceleration.

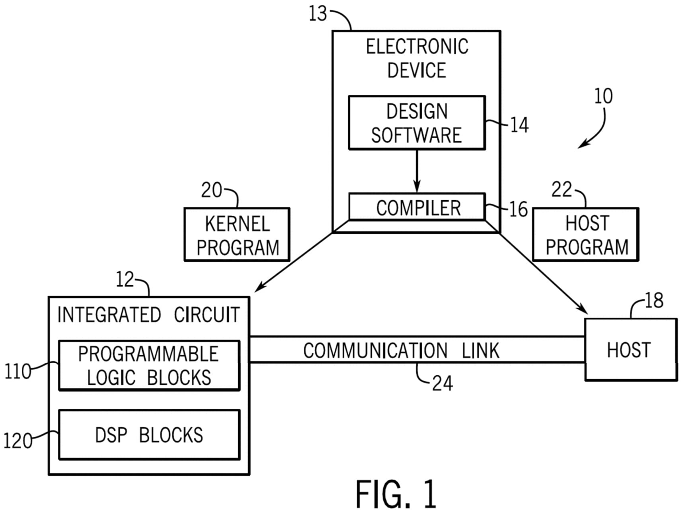

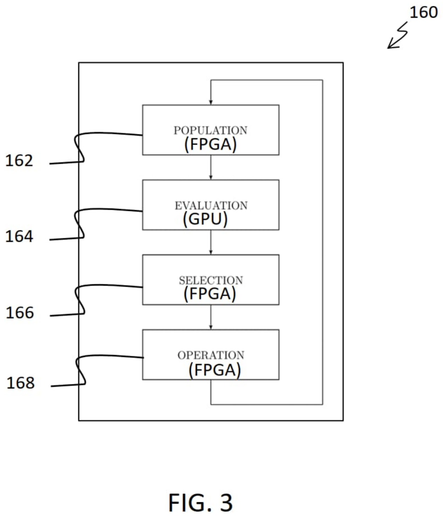

FIG. 1 illustrates a block diagram of a system 10 that may be used to accelerate evolutionary algorithms at least partly on an integrated circuit device 12, such as an FPGA (e.g., Agilex^{™}, Stratix^{®}, Arria^{®}, MAX^{®}, or Cyclone^{®} devices by Altera^{®} Corporation). Note that, while this disclosure largely refers to the integrated circuit device 12 as being a programmable logic device, such as an FPGA, in some embodiments, the integrated circuit device 12 may also be a one-time programmable device or structured application specific integrated circuit (structured ASIC), such as an Intel^{®} eASIC^{™} device by Intel^{®} Corporation. The portions of the evolutionary algorithms that may be accelerated on the integrated circuit device 12 may include those involving population, selection, and operation. The evaluation stage may take place on a separate device such as a GPU, as will be discussed below with reference to FIG. 3. Still referring to FIG. 1, the integrated circuit device 12 may be a single monolithic integrated circuit or a multi-die system of integrated circuits. A designer may desire to implement a system design to perform evolutionary algorithm operations on the integrated circuit device 12 (e.g., a programmable logic device such as a field-programmable gate array (FPGA) or an application-specific integrated circuit (ASIC) that includes programmable logic circuitry). The integrated circuit device 12 may include a single integrated circuit, multiple integrated circuits in a package, or multiple integrated circuits in multiple packages communicating remotely (e.g., via wires or traces) and may be referred to as an integrated circuit device or an integrated circuit system whether formed from a single integrated circuit or multiple integrated circuits in a package. In some cases, the designer may specify a high-level program to be implemented, such as an OPENCL^{®} program that may enable the designer to more efficiently and easily provide programming instructions to configure a set of programmable logic cells for the integrated circuit device 12 without specific knowledge of low-level hardware description languages (e.g., Verilog, very high-speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

In a configuration mode of the integrated circuit device 12, a designer may use an electronic device 13 (e.g., a computer including a data processing system having a processor and memory or storage) to implement high-level designs (e.g., a system user design) using design software 14 (e.g., executable instructions stored in a tangible, non-transitory, computer-readable medium such as the memory or storage of the electronic device 13), such as a version of INTEL^{®} QUARTUS^{®} by INTEL CORPORATION. The electronic device 13 may use the design software 14 and a compiler 16 to convert the high-level program into a lower-level description (e.g., a configuration program, a bitstream). The compiler 16 may provide machine-readable instructions representative of the high-level program to a host 18 and the integrated circuit device 12. The host 18 may receive a host program 22 that may control or be implemented by the kernel programs 20. To implement the host program 22, the host 18 may communicate instructions from the host program 22 to the integrated circuit device 12 via a communications link 24 that may include, for example, direct memory access (DMA) communications or peripheral component interconnect express (PCIe) communications. In some embodiments, the kernel programs 20 and the host 18 may configure programmable logic blocks (e.g., LABs 110) on the integrated circuit device 12. The programmable logic blocks (e.g., LABs 110) may include circuitry and/or other logic elements and may be configurable to implement a variety of functions in combination with digital signal processing (DSP) blocks 120.

The designer may use the design software 14 to generate and/or to specify a low-level program, such as the low-level hardware description languages described above. Further, in some embodiments, the system 10 may be implemented without a separate host program 22. Thus, embodiments described herein are intended to be illustrative and not limiting.

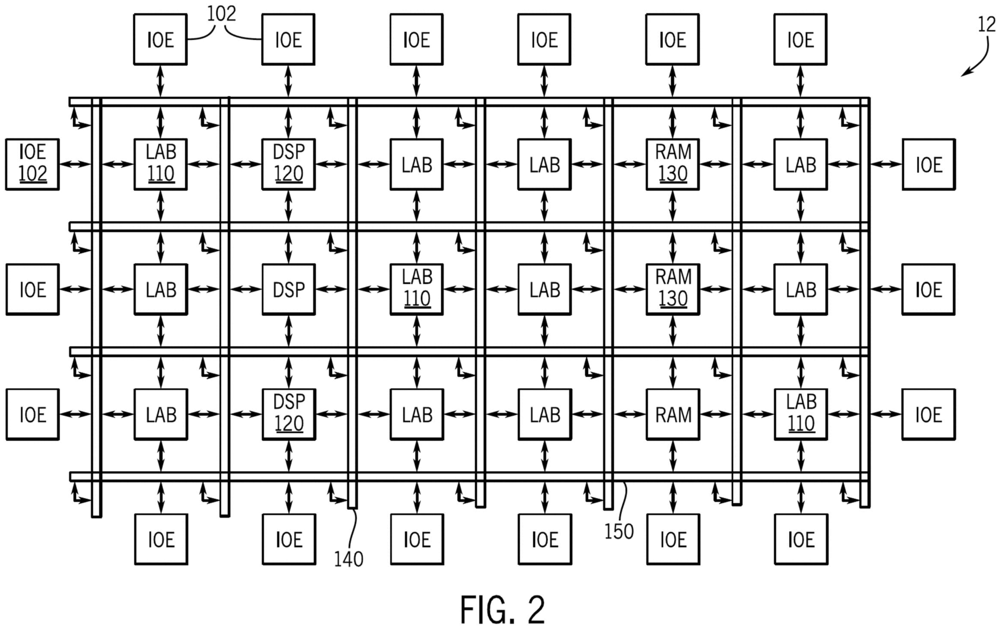

An illustrative embodiment of a programmable integrated circuit device 12 such as a programmable logic device (PLD) (e.g., a field programmable gate array (FPGA) device) that may be configured to implement a circuit design (also sometimes referred to as a system design) is shown in FIG. 2. The integrated circuit device 12 (e.g., a field-programmable gate array (FPGA) integrated circuit device) may include a two-dimensional array of functional blocks sometimes referred to as programmable logic blocks (e.g., also referred to as logic array blocks (LABs) 110 or configurable logic blocks (CLBs)) that may include some number of adaptive logic modules (ALMs) that may be programmed to behave as particular logic circuitry. The integrated circuit device 12 may also include other functional blocks, such as embedded digital signal processing (DSP) blocks 120 and embedded random-access memory (RAM) blocks 130. Functional blocks such as LABs 110 may include smaller programmable regions (e.g., logic elements, configurable logic blocks, or adaptive logic modules) that receive input signals and perform custom functions on the input signals to produce output signals. LABs 110 may also be grouped into larger programmable regions, sometimes referred to as logic sectors, that are individually managed and configured by corresponding logic sector managers. The grouping of the programmable logic resources on the integrated circuit device 12 into logic sectors, logic array blocks, logic elements, or adaptive logic modules is merely illustrative. In general, the integrated circuit device 12 may include functional logic blocks of any suitable size and type, which may be organized in accordance with any suitable logic resource hierarchy.

Programmable logic circuitry of the integrated circuit device 12 may be controlled by programmable memory elements sometimes referred to as configuration random access memory (CRAM). Memory elements may be loaded with configuration data (also called programming data or a configuration bitstream) using input-output elements (IOEs) 102. Once loaded, the memory elements each provide a corresponding static control signal that controls the operation of an associated functional block (e.g., LABs 110, DSP blocks 120, RAM 130, or IOEs 102).

In one scenario, the outputs of the loaded memory elements are applied to the gates of metal-oxide-semiconductor transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory (ROM) memory cells, mask-programmed and laser-programmed structures, combinations of these structures, etc. Because the memory elements are loaded with configuration data during programming, the memory elements are sometimes referred to as configuration memory, configuration random-access memory (CRAM), or programmable memory elements. The integrated circuit device 12 (e.g., as a programmable logic device (PLD)) may be configured to implement a custom circuit design. For example, the configuration RAM may be programmed such that LABs 110, DSP blocks 120, and RAM 130, programmable interconnect circuitry (e.g., vertical channels 140 and horizontal channels 150), and the input-output elements 102 form the circuit design implementation.

In addition, the programmable logic device may have input-output elements (IOEs) 102 for driving signals off the integrated circuit device 12 and for receiving signals from other devices. Input-output elements 102 may include parallel input-output circuitry, serial data transceiver circuitry, differential receiver and transmitter circuitry, or other circuitry used to connect one integrated circuit to another integrated circuit.

The integrated circuit device 12 may also include programmable interconnect circuitry in the form of vertical routing channels 140 (i.e., interconnects formed along a vertical axis of the integrated circuit device 12) and horizontal routing channels 150 (i.e., interconnects formed along a horizontal axis of the integrated circuit device 12), each routing channel including at least one track to route at least one wire. If desired, the interconnect circuitry may include pipeline elements or network-on-chip (NOC) features to transfer data in a packetized format.

FIG. 3 illustrates a flowchart 160 of a method for performing evolutionary algorithms using the integrated circuit device 12 and a parallel processing engine such as a graphics processing unit (GPU). Evolutionary algorithms are based on the principle that, given a population of individuals competing for resources in an environment, the fitness of the population increases with time. Evolutionary algorithms can be generalized as shown in the flowchart 160. First, a population of individuals that represent possible solutions to a problem are initialized using the integrated circuit device 12 (e.g., an FPGA) (block 162). A fitness function to determine candidates of the highest quality may be applied during an evaluation that takes place across the population using a parallel processing engine such as a GPU (block 164). Based on these fitness values, some of the better candidates are chosen to seed the next generation using selection circuitry on the integrated circuit device 12 (block 166). This may be done in operation circuitry of the integrated circuit device 12 by applying recombination and/or mutation to the selected individuals (block 168). Recombination is an operator that may be applied to two or more selected candidates (often referred to as the parents), producing one or more new candidates (often referred to as the children). A mutation applied to one candidate results in a new candidate. These new candidates become the next population, and the process of the flowchart 160 may repeat. For example, the offspring have their fitness computed and then compete with the previous generation to become the seeds of the next generation. This process may be repeated until a candidate individual with sufficient quality (e.g., a solution) is found. Individuals of the population represent possible solutions to the problem and may simply be bit-strings to hardware, but can be encodings of anything from trees to entire neural networks. Besides operation (block 168), all stages of the flowchart 162 can be made agnostic of this encoding.

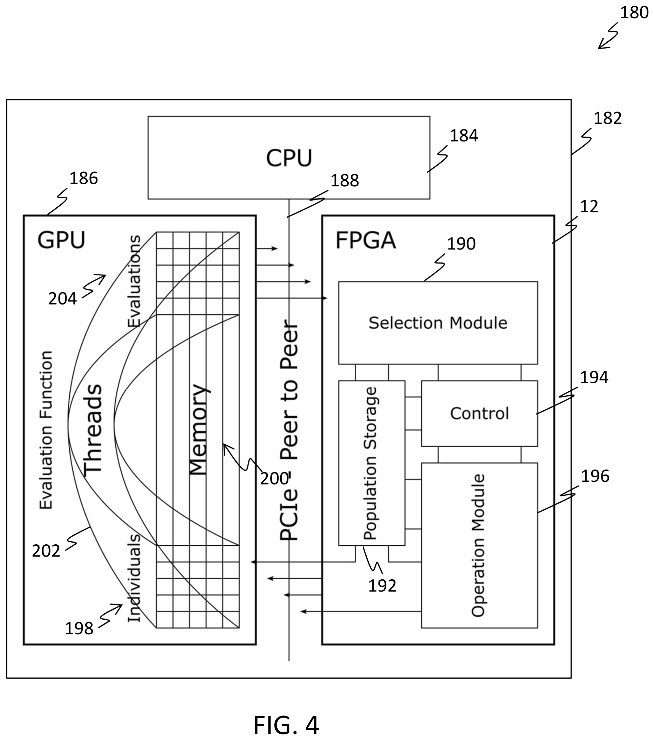

FIG. 4 illustrates a hybrid FPGA-GPU accelerator 180 to accelerate evolutionary algorithms. The hybrid FPGA-GPU accelerator 180 may be contained on a package 182, may be formed as a single monolithic device, may be on separate boards, or even may be part of separate data centers. The hybrid FPGA-GPU accelerator 180 includes a CPU 184 that manages the operation of any suitable parallel processing engine, such as a graphics processing unit (GPU) 186, and the integrated circuit device 12, which may have field programmable gate array (FPGA) circuitry to accelerate evolutionary algorithms. For instance, the CPU 184 may enable communication between the GPU 186 and the integrated circuit device 12 using any suitable technique. In one example, the CPU 184 may use a Peripheral Component Interconnect Express (PCIe) connection 188 to instruct the GPU 186 and the integrated circuit device 12. There may be many available technologies to do so, such as GPUDirect by NVDIA^{®}, but all are based on PCIe transactions and thus the CPU 184 may be used to enable this communication. Note that, for such setups, once the CPU 184 sets up the PCIe connection 188 (e.g., by passing the PCI address of memory in the GPU 186 to the integrated circuit device 12), the CPU 184 may not be involved in the computation.

The integrated circuit device 12 may include hardware blocks to enable the various stages of evolutionary algorithms other than evaluation, which is more efficiently performed by the GPU 186. These blocks may include a selection module 190, population storage 192, control circuitry 194, and an operation module 196. These blocks may be implemented in hardened logic or soft logic of programmable logic circuitry of the integrated circuit device 12. The selection module 190 may perform selection as in block 166 of the flowchart 160, selecting individuals of the evaluated population to be used to generate a next generation population. The population storage 192 may include memory or storage elements that contain the individuals (or references to memory outside of the integrated circuit device 12 where the individuals may be stored) that have been selected and/or operated on by the operation module 196. The control circuitry 194 may include any suitable control logic circuitry, such as a finite state machine (FSM) or a processor executing firmware (e.g., instructions stored on a tangible, non-transitory, machine readable medium executed by the processor) to control the blocks 190, 192, and 196. The operation module 196 may use the selected individuals from the previous population to generate a new population through recombination and/or mutation, thereby evolving a new set of individuals for the next population.

Note that the selection module 190, population storage 192, control circuitry 194, and operation module 196 may be programmed into the integrated circuit device 12. Indeed, even if the evaluation method of the GPU 186 changes, the selection method of the selection module 190 may remain the same since it may produce a fitness ranking of the evaluated individuals for any problem that is evaluated by the GPU 186. Similarly, the operation module 196 may simply support a certain population representation and problems can be adapted. Indeed, there may be a few popular representations that users could select to use from among a library of operation modules supporting popular representations. To support different representations and/or problems, the operations module 196 may be configured at the outset of operation or partially reconfigured during runtime.

For a broad-based evolutionary algorithm computation accelerator, the evaluation stage (e.g., block 164 of FIG. 3) may be most efficiently performed in software in parallel on the GPU 186 and the other stages performed in hardware on the integrated circuit device 12. The core reasoning being that the evaluation stage solely defines the problem to solve, since it defines what it means for the population to get better. This means that, for the user to tailor the accelerator 180 to solve their problem, as long as the operations module 196 supports the population encoding they are using, the user may simply modify the evaluation function, and software provides the ease and flexibility for this modification compared to designing a hardware module for each problem.

The CPU 184 may also load the evaluation algorithm on the GPU 186 and start its processing when enough data is present. For example, all individuals 198 in the population may loaded into memory 200 of the GPU 186 and be evaluated, which means the same evaluation function 202 may be applied to potentially thousands of individuals 198, ideally in parallel. Evaluations 204 are the result of the evaluation function 202 performed by software running on the GPU 186. The evaluations 204 indicate the fitness of each individual 198 that was evaluated.

Note that data, such as the evaluations 204, from the GPU 186 may be read by the integrated circuit device 12 through the PCIe connection 188, potentially using a same direct memory access (DMA) engine used to write data to the memory. Overall, this is a feasible (and previously demonstrated) approach for a peer-to-peer setup using writes and reads from the integrated circuit device 12 to the GPU 186 memory 200 using DMA engines over the PCIe connection 188, with the CPU 184 sharing the PCI address of the memory 200 of the GPU 186.

The evaluation function 202 for the user's problem may be run thousands of times across thousands of threads operating on different individuals 198 to produce their fitness values (e.g., evaluations 204), all in parallel; this builds on the acceleration offered by an FPGA-only solution by utilizing the flexibility and parallelism of the GPU 186 to reach previously unattainable evolution rates for a general-purpose evolutionary algorithm accelerator.

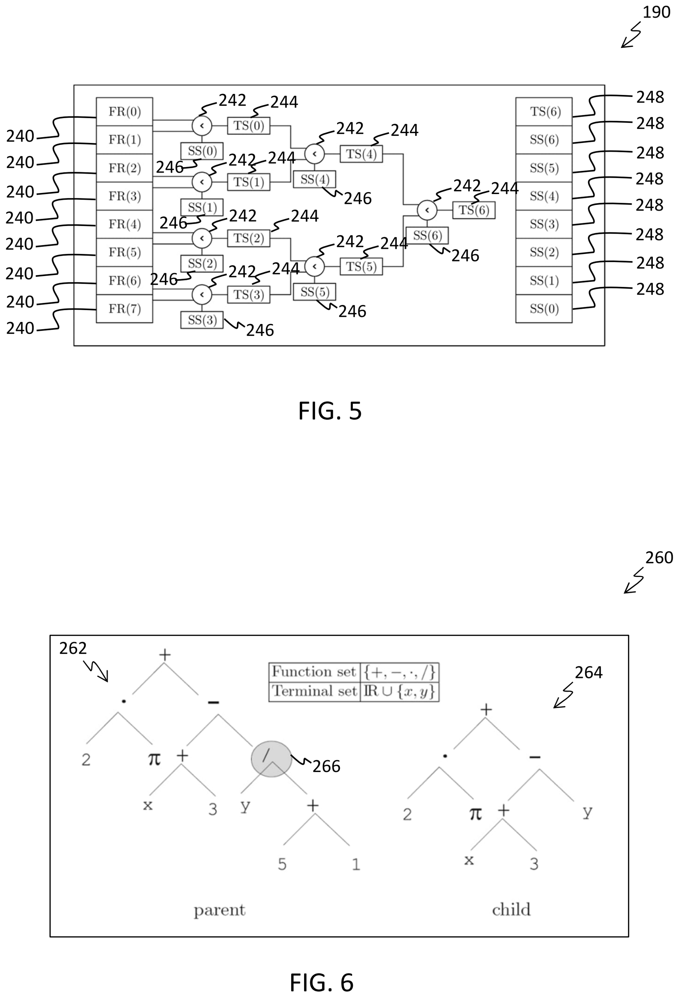

FIG. 5 illustrates one example of the operation of the selector module 190 by applying a tournament selection. The fitness values from the evaluations 204 of all the tested individuals may be retrieved and stored in registers on the integrated circuit device 12. Here, these are referred to as FR 240. The FRs 240 enter comparisons 242. Winning candidates TS 244 with the best evaluation of each comparison 242 advances to a subsequent comparison 242 or eventually is the overall winner. Losing candidates SS 246 do not advance. A top number or portion (e.g., percent, fraction) of ranked candidates 248 may be selected as the fittest candidates for operations in the operations module 196. Algorithms like the tournament selection shown in FIG. 5 may be used to perform the selection process in parallel, potentially in a single clock cycle. Note individuals and their fitness values may be stored separately. As such, the selection module 190 may pass addresses of the chosen individuals to be stored in the population storage 192 or used by the operations module 196.

In contrast to deterministic selection algorithms that risk premature convergence in local optima, tournament selection may inject randomness into the process. Unlike other selection methods that order individuals first and then add a randomization step, tournament selection achieves this through seeding, which may be stochastically determined. As a result, even lower-performing individuals can rank higher due to their placement within the population, promoting exploration beyond readily apparent good solutions.

While the potential applications of evolutionary algorithms are broad, there are a few representations that solutions to problems are often encoded into such as bit strings or trees. Besides the evaluation stage, which is performed in GPU 186, the particular coding may only affect the operation module 260, since it may support mutation and recombination operations for that particular encoding. Note that the evaluation function 202, running in software on the GPU 186, may be easily modified to support any suitable encoding for a representation regardless of how it is defined in hardware.

One example of an encoding that may undergo an evolutionary operation, such as a mutation 260, by the operations module 196 is an expression tree, as shown in FIG. 6. The operations module 196 may mutate a parent tree 262 to obtain a child tree 264. The parent tree 262 encodes an expression 2π + ((x + 3) - (y / (5 + 1))). The operations module 196 may be constrained by a function set (e.g., certain arithmetic operations that may be changed) and/or a terminal set (e.g., a range of values that may be changed). In the example of FIG. 6, the operations module 196 may remove an operator 266 to produce the child tree 264, which now encodes the expression 2π + ((x + 3) - y. The child tree 264 represents one example of a new individual in the population that may be subsequently evaluated by the GPU 186.

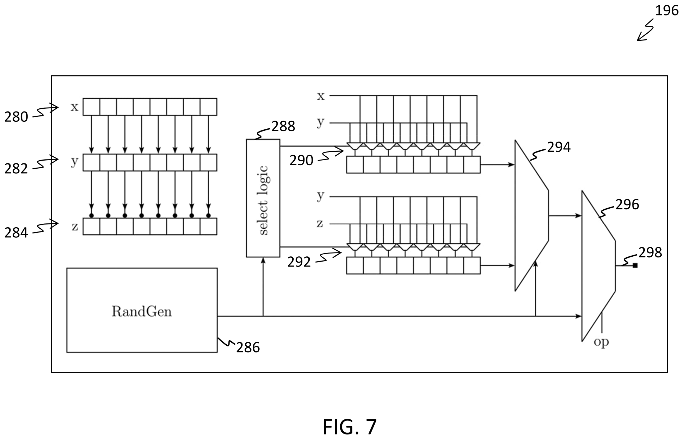

Another example of an encoding that may undergo an evolutionary operation, such as recombination or mutation, by the operations module 196 is a bit string, as shown in FIG. 7. FIG. 7 illustrates one example of circuitry that may form the operations module 196 to operate on a bit string. For example, parent bit strings 280 (x), 282 (y), and 284 (z) may be individuals that are encoded as bit strings. The parent bit strings 280 and 282 may have been selected by the selection module 190 out of the last population of individuals. The parent bit string 284 may represent a mutated individual z that is determined based on the parent bit strings 280 and 282.

A random value generator 286 may randomly or pseudorandomly output selection signals. The random value generator 286 may be formed using any suitable logic circuitry (e.g., a linear feedback shift register (LFSR)). The selection signals output by the random value generator 286 may be used by select logic 288 to select bits or bit groups from either the parent bit string 280 or 282 and used by select logic 288 to select bits or bit groups from either the parent bit string 282 or 284. The selection signals may also randomly select between the bits or bit groups entering a first multiplexer 294. For even more randomness, a second multiplexer 296 may select between the output of the first multiplexer 294 or the output of the random value generator 286 depending on an operation selection signal (op), which defines whether the operations module 196 is performing a recombination operation or a mutation operation for a particular bit or bit region.

In any case, the operations module 196 may perform any mutation or recombination operation that takes in the chosen individuals and performs operations on them to produce the next generations of individuals, ideally at a rate that does now allow the GPU 186 to go idle.

There may be several data transfers that happen between the integrated circuit device 12 and the GPU 186. First, the GPU 186 may have multiple threads of the evaluation function 202 evaluating multiple individuals 198 and the resultant fitness values (e.g., evaluations 204) may be stored in the memory 200 of the GPU 186. All of these values may be read and stored in register of the integrated circuit device 12, with high throughput to make good use of the processing of the GPU 186. The next generation of individuals to be evaluated are created in the integrated circuit device 12 and will be stored in the memory 200 of the GPU 186, ideally at a rate such that the GPU 186 never goes idle (e.g., the GPU 186 may have the next generation of individuals 198 in its memory 200 before it finishes evaluating the current generation of individuals 198).

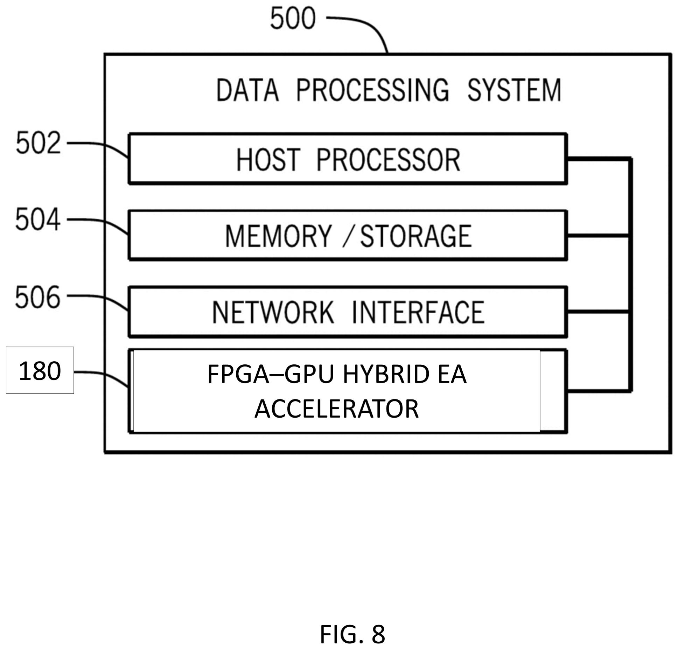

The system 180 discussed above may be a component included in a data processing system, such as a data processing system 500, shown in FIG. 8. The data processing system 500 may include the system 180 (e.g., a programmable logic device and a GPU, an application specific integrated circuit (ASIC) and a GPU), a host processor 502, memory and/or storage circuitry 504, and a network interface 506. The data processing system 500 may include more or fewer components (e.g., electronic display, user interface structures, application specific integrated circuits (ASICs)). Moreover, any of the circuit components depicted in FIG. 8 may include the system 180. The host processor 502 may include any of the foregoing processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams, mapping function) for programming the integrated circuit device 12 of the system 180. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

The techniques and methods described herein may be applied with other types of integrated circuit systems. To provide only a few examples, these may be used with central processing units (CPUs), graphics cards, hard drives, or other components.

While the embodiments set forth in the present disclosure may be susceptible to various modifications and alternative forms, specific embodiments have been shown by way of example in the drawings and have been described in detail herein. However, the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. A system for performing an evolutionary algorithm comprising:
an integrated circuit device comprising circuitry configured to perform population selection and evolution operations of the evolutionary algorithm; and
a parallel processing system configured to perform population evaluation of the evolutionary algorithm.

EXAMPLE EMBODIMENT 2. The system of example embodiment 1, wherein the integrated circuit device comprises a field programmable gate array and the circuitry configured to perform population selection and evolution operations comprises programmable logic circuitry of the field programmable gate array.

EXAMPLE EMBODIMENT 3. The system of example embodiment 1, wherein the circuitry configured to perform population selection and evolution operations comprises a selection module configured to select individuals for evolution operation based on the population evaluation of the parallel processor.

EXAMPLE EMBODIMENT 4. The system of example embodiment 3, wherein the selection module is configured to perform tournament selection to select the individuals.

EXAMPLE EMBODIMENT 5. The system of example embodiment 3, wherein the selection module is configured to select the individuals during a single clock cycle.

EXAMPLE EMBODIMENT 6. The system of example embodiment 1, wherein the circuitry configured to perform evolution operations comprises circuitry to perform a mutation of a selected individual.

EXAMPLE EMBODIMENT 7. The system of example embodiment 1, wherein the circuitry configured to perform evolution operations comprises circuitry to perform recombination based on two or more selected individuals.

EXAMPLE EMBODIMENT 8. The system of example embodiment 1, comprising a central processing unit to coordinate operations between the integrated circuit device and the parallel processing system.

EXAMPLE EMBODIMENT 9. The system of example embodiment 8, wherein the central processing unit is to program the parallel processing system with instructions to perform the population evaluation in parallel.

EXAMPLE EMBODIMENT 10. The system of example embodiment 1, wherein the integrated circuit device and the parallel processing system are disposed on separate dies.

EXAMPLE EMBODIMENT 11. A method comprising:
providing a first population of individuals of an evolutionary algorithm from a field programmable gate array;
performing an evaluation of the individuals of the first population using a graphics processing unit to generate fitness values of the individuals;
performing a selection from among the individuals of the first population to obtain selected individuals of the first population based on the fitness values using the field programmable gate array; and
performing an evolution operation based on the selected individuals of the first population to generate a second population of individuals.

EXAMPLE EMBODIMENT 12. The method of example embodiment 11, comprising repeating the method using the second population of individuals.

EXAMPLE EMBODIMENT 13. The method of example embodiment 11, comprising programming the field programmable gate array with a selection module to perform the selection and an operation module to perform the evolution operation.

EXAMPLE EMBODIMENT 14. The method of example embodiment 11, comprising storing the selected individuals in a local storage of the field programmable gate array.

EXAMPLE EMBODIMENT 15. The method of example embodiment 11, wherein the performing the selection comprises performing a tournament selection.

EXAMPLE EMBODIMENT 16. The method of example embodiment 11, comprising loading the first population of individuals into memory of the graphics processing unit before the evaluation of the individuals of the first population begins.

EXAMPLE EMBODIMENT 17. An article of manufacture comprising tangible, non-transitory, machine-readable instructions that, when executed by a central processing unit, cause the central processing unit to perform operations comprising:
controlling a graphics processing unit to load a first population of individuals of an evolutionary algorithm into memory;
controlling the graphics processing unit to perform an evaluation of the individuals of the first population to generate fitness values of the individuals; and
controlling a field programmable gate array to retrieve the fitness values of the individuals to enable the field programmable gate array to perform a selection from among the individuals of the first population to obtain selected individuals of the first population based on the fitness values and perform an evolution operation based on the selected individuals of the first population to generate a second population of individuals.

EXAMPLE EMBODIMENT 18. The article of manufacture of example embodiment 17, wherein the operations comprise repeating the operations using the second population of individuals.

EXAMPLE EMBODIMENT 19. The article of manufacture of example embodiment 17, wherein the operations comprise configuring the field programmable gate array with a system design with a selection module to perform selection and an operation module to perform evolution operations.

EXAMPLE EMBODIMENT 20. The article of manufacture of example embodiment 19, wherein the operations comprise partially reconfiguring the field programmable gate array with a different operation module that supports a different encoding.

## Claims

1. A system for performing an evolutionary algorithm comprising:
an integrated circuit device comprising circuitry configured to perform population selection and evolution operations of the evolutionary algorithm; and
a parallel processing system configured to perform population evaluation of the evolutionary algorithm.

2. The system of claim 1, wherein the integrated circuit device comprises a field programmable gate array and the circuitry configured to perform population selection and evolution operations comprises programmable logic circuitry of the field programmable gate array.

3. The system of one of the previous claims, wherein the circuitry configured to perform population selection and evolution operations comprises a selection module configured to select individuals for evolution operation based on the population evaluation of the parallel processor.

4. The system of claim 3, wherein the selection module is configured to perform tournament selection to select the individuals.

5. The system of claim 3 or 4, wherein the selection module is configured to select the individuals during a single clock cycle of the integrated circuit device.

6. The system of one of the previous claims, wherein the circuitry configured to perform evolution operations comprises circuitry to perform a mutation of a selected individual.

7. The system of one of the previous claims, wherein the circuitry configured to perform evolution operations comprises circuitry to perform recombination based on two or more selected individuals.

8. The system of one of the previous claims, comprising a central processing unit to coordinate operations between the integrated circuit device and the parallel processing system.

9. The system of claim 8, wherein the central processing unit is to program the parallel processing system with instructions to perform the population evaluation in parallel.

10. The system of one of the previous claims, wherein the integrated circuit device and the parallel processing system are disposed on separate dies.

11. A method comprising:
providing a first population of individuals of an evolutionary algorithm from a field programmable gate array;
performing an evaluation of the individuals of the first population using a graphics processing unit to generate fitness values of the individuals;
performing a selection from among the individuals of the first population to obtain selected individuals of the first population based on the fitness values using the field programmable gate array; and
performing an evolution operation based on the selected individuals of the first population to generate a second population of individuals.

12. The method of claim 11, comprising repeating the method using the second population of individuals.

13. The method of claim 11 or 12, comprising programming the field programmable gate array with a selection module to perform the selection and an operation module to perform the evolution operation.

14. The method of claim 11, 12 or 13, comprising storing the selected individuals in a local storage of the field programmable gate array.

15. A computer program comprising machine-readable instructions that, when executed by a central processing unit, cause the central processing unit to perform operations comprising:
controlling a graphics processing unit to load a first population of individuals of an evolutionary algorithm into memory;
controlling the graphics processing unit to perform an evaluation of the individuals of the first population to generate fitness values of the individuals; and
controlling a field programmable gate array to retrieve the fitness values of the individuals to enable the field programmable gate array to perform a selection from among the individuals of the first population to obtain selected individuals of the first population based on the fitness values and perform an evolution operation based on the selected individuals of the first population to generate a second population of individuals.
